# EUROPÄISCHE PATENTANMELDUNG

(11) **EP 4 714 258 A1**
(43) Veröffentlichungstag der Anmeldung: **25.03.2026**
(21) Anmeldenummer: 24200972.8
(22) Anmeldetag: 18.09.2024
(51) Int. Cl.: A01J 5/007, A01J 5/04, A01J 9/00, A01K 9/00

(54) **VERFAHREN ZUR VERSORGUNG EINER KÄLBERFÜTTERUNGSMASCHINE MIT VOLLMILCH**

(71) Anmelder: Holm, Hans Joachim, 24784 Westerrönfeld (DE); Holm, Hannes, 24784 Westerrönfeld (DE)
(72) Erfinder: Holm, Hans Joachim, 24784 Westerrönfeld (DE); Holm, Hannes, 24784 Westerrönfeld (DE)
(74) Vertreter: Hauck Patent- und Rechtsanwälte PartmbB

(57) **Zusammenfassung**

Verfahren zur Versorgung einer Fütterungseinrichtung mit Vollmilch, wobei das Verfahren die folgenden Schritte aufweist:
• Melken einer Vielzahl von Kühen mit einem Melkroboter (10), der die jeweils gemolkene Kuh identifiziert, wobei die Milch mindestens einer der Kühe als Separationsmilch klassifiziert ist,
• Einleiten von verkaufsfähiger Milch über eine erste Leitung (12) von dem Melkroboter in einen Kühltank (14),
• Einleiten von Separationsmilch über eine zweite Leitung (22) von dem Melkroboter in einen Vorratsbehälter (20), aus dem die Milch mit einer Fütterungseinrichtung an Kälber verteilt werden soll, wobei bei dem Verfahren eine elektronische Steuerung (24) verwendet wird, die die folgenden Schritte ausführt:
• Auswerten eines Füllstands in dem Vorratsbehälter (20) zu einem ersten Zeitpunkt, der vor einem vorgegebenen Fütterungszeitpunkt liegt, und, falls der Füllstand eine vorgegebenen Fütterungsmenge unterschreitet,
• Auffüllen des Vorratsbehälters (20) mit verkaufsfähiger Milch, bis die vorgegebene Fütterungsmenge erreicht ist, wobei das Auffüllen von der elektronischen Steuerung (24) durch Ansteuern eines ersten Ventils (30) und/oder einer Pumpe bewirkt wird.

## Beschreibung

In Milchviehbetrieben wird die produzierte, verkaufsfähige Milch von einer Melkeinrichtung in einen Kühltank geleitet und dort gelagert.

Ein Teil der produzierten Milch kann für eine Fütterung von Kälbern eingesetzt werden. Die hierfür bestimmte Milch wird in der Regel beim Melken von der für den Verkauf bestimmten Milch separiert und darum als Separationsmilch bezeichnet. Bevorzugt handelt es sich um Milch, die nicht für den Verkauf geeignet ist, zum Beispiel weil sie von einer erkrankten Kuh stammt. Die Separationsmilch wird nicht in den Kühltank für die verkaufsfähige Milch, sondern in einen gesonderten Behälter geleitet. Später kann sie über einen Fütterungsautomaten oder durch Befüllen von Tränkebehältern zum Beispiel mit einem Milchwagen verfüttert werden.

Wird mit einem herkömmlichen Melkstand gemolken, werden diejenigen Kühe, deren Milch als Separationsmilch verwendet werden soll, getrennt von den übrigen Kühen gemolken. Bei Verwendung eines Melkroboters kann dieser die Kühe identifizieren und einzeln melken. In beiden Fällen muss vor dem Melken festgelegt werden, welche Kühe die Separationsmilch liefern sollen, damit diese wie gewünscht in den gesonderten Behälter geleitet werden kann. Soll die Separationsmilch an Kälber vertränkt werden, muss der Landwirt sich aktiv und täglich darum kümmern, dass ausreichend Separationsmilch verfügbar ist und muss zu diesem Zweck eine passende Anzahl von Kühen auswählen, deren Milch als Separationsmilch verwendet werden soll. Regelmäßig sind auch Kühe umfasst, deren Milch verkaufsfähig wäre. Wählt er zu viele Kühe aus, wird er Milch wegschütten müssen, die für die Tränke nicht verwendet werden kann, weil sie zu alt ist oder keine Kapazität zur Lagerung vorhanden ist. Dies führt selbst bei relativ geringen Mengen zu hohen wirtschaftlichen Einbußen von mehreren Tausend Euro pro Jahr.

Aus der WO 2024105588 A1 ist ein Melkroboter bekannt geworden, mit dem nicht zum menschlichen Verzehr geeignete Milch automatisch in einen von der verkaufsfähigen Milch getrennten Vorratsbehälter geleitet wird. Gelöst wird dies durch ein Umschaltventil, das die Milch während des Melkvorgangs in eine andere Leitung, die Separationsleitung, lenkt.

Aus der EP 3 849 298 B1 ist ein Fütterungssystem bekannt geworden, dass zwei Vollmilchtanks und eine Zubereitungseinheit zur Zubereitung einer Tränkeration aufweist. Ein Reinigungsvorgang kann nach Maßgabe eines Zeitplans automatisch so ausgeführt werden, dass während des Reinigungsvorgangs in einem der beiden Vollmilchtanks immer ein ausreichender Vorrat in dem anderen Vollmilchtank vorhanden ist.

Davon ausgehend ist es die Aufgabe der Erfindung, ein Verfahren zur Versorgung einer Fütterungseinrichtung mit Vollmilch zur Verfügung zu stellen, das die vorhandenen Ressourcen optimal nutzt, einfach ausgeführt werden kann und zu bestimmten Zeitpunkten eine definierte Menge und Qualität bereitstellt.

Diese Aufgabe wird gelöst durch das Verfahren mit den Merkmalen des Anspruchs 1. Bevorzugte Ausgestaltungen sind in den Unteransprüchen angegeben.

Das Verfahren dient zur Versorgung einer Fütterungseinrichtung mit Vollmilch und weist die folgenden Schritte auf:
- Melken einer Vielzahl von Kühen mit einem Melkroboter, der die jeweils gemolkene Kuh identifiziert, wobei die Milch mindestens einer der Kühe als Separationsmilch klassifiziert ist,
- Einleiten von verkaufsfähiger Milch über eine erste Leitung von dem Melkroboter in einen Kühltank,
- Einleiten von Separationsmilch über eine zweite Leitung von dem Melkroboter in einen Vorratsbehälter, aus dem die Milch mit einer Fütterungseinrichtung an Kälber verteilt werden soll, wobei bei dem Verfahren eine elektronische Steuerung verwendet wird, die die folgenden Schritte ausführt:
- Auswerten eines Füllstands in dem Vorratsbehälter zu einem ersten Zeitpunkt, der vor einem vorgegebenen Fütterungszeitpunkt liegt, und, falls der Füllstand eine vorgegebenen Fütterungsmenge unterschreitet,
- Auffüllen des Vorratsbehälters mit verkaufsfähiger Milch, bis die vorgegebene Fütterungsmenge erreicht ist, wobei das Auffüllen von der elektronischen Steuerung durch Ansteuern eines ersten Ventils und/oder einer Pumpe bewirkt wird.

Der Melkroboter ist ein vollautomatisches Melksystem, mit dem in der Regel immer nur einzelne, dem System bekannte Tiere gemolken werden. Der Melkroboter identifiziert die jeweils gemolkene Kuh und ist zu diesem Zweck mit einer Identifizierungseinrichtung ausgestattet, die zum Beispiel einen Transponder am Ohr der Kuh ausliest. Der Melkroboter kann außerdem auf Informationen über alle dem System bekannten Kühe zugreifen. Anhand dieser Informationen kann der Melkroboter feststellen, ob die Milch der gerade gemolkenen Kuh als Separationsmilch klassifiziert ist. In diesem Fall kann der Melkroboter die Milch dieser Kuh entsprechend handhaben, d. h. insbesondere in den zur Aufnahme der Separationsmilch vorgesehenen Vorratsbehälter, der über die zweite Leitung mit dem Melkroboter verbunden ist, einleiten. Handelt es sich nicht um Separationsmilch, sondern um verkaufsfähige Milch, kann der Melkroboter (gegebenenfalls im Zusammenwirken mit der elektronischen Steuerung) die Milch als verkaufsfähige Milch über die erste Leitung von dem Melkroboter in den Kühltank einleiten.

Die Pumpe kann eine externe Pumpe sein, die unmittelbar von der elektronischen Steuerung angesteuert wird und die zum Auffüllen des Vorratsbehälters verwendete Milch vom Melkroboter oder aus dem Kühltank in den Vorratsbehälter fördert. Alternativ kann es sich um eine Pumpe des Melkroboters handeln, die während eines Melkvorgangs für den Transport der gemolkenen Milch durch die erste Leitung und/oder durch die zweite Leitung eingesetzt wird.

Die elektronische Steuerung kann ein separates Steuergerät sein, beispielsweise ein PC, kann aber auch in ein anderes Gerät integriert sein, insbesondere in den Melkroboter oder die Fütterungseinrichtung.

Die Melkvorgänge der einzelnen Kühe können in beliebiger Reihenfolge und zu beliebigen Zeiten erfolgen. Dies ergibt sich insbesondere daraus, dass die jeweiligen Kühe den Melkroboter zu beliebigen Zeiten aufsuchen können. Hierzu können Sie durch Bereitstellen von attraktivem Kraftfutter im Melkroboter zusätzlich motiviert werden.

Der erste Zeitpunkt kann beispielsweise einen zeitlichen Abstand im Bereich von 1 Minute bis 60 Minuten von dem vorgegebenen Fütterungszeitpunkt haben. Dieser Abstand ist so bemessen, dass ausreichend Zeit zum Auffüllen des Vorratsbehälters bis zu dem vorgegebenen Fütterungszeitpunkt verbleibt.

Bei dem Verfahren ist vorgesehen, die zum Fütterungszeitpunkt in dem Vorratsbehälter befindliche Milch mit einer Fütterungseinrichtung an Kälber zu verteilen. Dieser Schritt kann Teil des beanspruchten Verfahrens sein oder im Anschluss ausgeführt werden. Idealerweise ist vorgesehen, die gesamte, in dem Vorratsbehälter befindliche Milch zu vertränken. Dabei handelt es sich einerseits um die ursprünglich als Separationsmilch klassifizierte Milch, die unmittelbar nach dem Melken der entsprechenden Kühe in den Vorratsbehälter geleitet worden ist, andererseits um die verkaufsfähige Milch, mit der der Vorratsbehälter vor dem Fütterungszeitpunkt aufgefüllt worden ist. Dadurch ist es möglich, die Kälber kontinuierlich mit Vollmilch zu versorgen und dabei die vorhandene Separationsmilch optimal auszunutzen.

Mithilfe einer elektronischen Steuerung werden bei dem Verfahren zwei Schritte ausgeführt, die sicherstellen, dass zu einem vorgegebenen Fütterungszeitpunkt die vorgesehene Menge an Vollmilch in dem Vorratsbehälter verfügbar ist. Bei diesen Schritten hat handelt es sich einerseits um ein Auswerten des Füllstands in dem Vorratsbehälter zu einem ersten Zeitpunkt, der vor dem vorgegebenen Fütterungszeitpunkt liegt. Falls dieser Füllstand die vorgegebene Fütterungsmenge unterschreitet, wird in einem zweiten Schritt der Vorratsbehälter mit verkaufsfähiger Milch aufgefüllt, bis die vorgegebene Fütterungsmenge erreicht ist. Dieses Auffüllen wird von der elektronischen Steuerung automatisch durch Ansteuern eines ersten Ventils und/oder einer Pumpe bewirkt. Dadurch wird weitestgehend sichergestellt, dass zum Fütterungszeitpunkt die gewünschte Menge an Vollmilch in dem Vorratsbehälter bereitsteht. Durch die Erfindung gelingt dies weitestgehend automatisch, sodass in der Regel kein manuelles Eingreifen und auch keine tagesaktuelle Planung notwendig ist.

Ein weiterer Vorteil der Erfindung ist, dass die verfügbare Separationsmilch aufgebraucht wird, bevor zusätzlich verkaufsfähige Milch zu Fütterungszwecken bereitgestellt wird. Anders als beim traditionellen Vorgehen, bei dem durch Festlegen einer bestimmten Gruppe von Tieren die zur Fütterung verfügbare Milchmenge vorgegeben wird, führen Schwankungen der Milchleistung bei der Erfindung nicht zu Abweichungen der für Fütterungszwecke bereitstehenden Milchmenge. Dies ist insbesondere in Verbindung mit dem Melkroboter von Bedeutung, weil zusätzliche Schwankungen der zu einem bestimmten Zeitpunkt gemolkenen Milchmenge dadurch auftreten, dass die Kühe nicht zu festen Zeiten gemolken werden.

Bei der Erfindung werden die vorhandenen Ressourcen optimal genutzt. Zugleich kommt es zu einer wesentlichen Verringerung des Planungsaufwands für die Bereitstellung der zu vertränkenden Vollmilch.

In einer Ausgestaltung ist das erste Ventil und/oder die Pumpe in dem Melkroboter angeordnet, wobei das Ansteuern des ersten Ventils und/oder der Pumpe dadurch ausgeführt wird, dass die elektronische Steuerung ein Steuersignal an den Melkroboter abgibt. In dieser Ausgestaltung kann das erste Ventil eingangsseitig mit einer Melkeinrichtung verbunden sein und ausgangsseitig zwischen der ersten Leitung und der zweiten Leitung umschalten. Durch entsprechendes Ansteuern des ersten Ventils kann dann die gemolkene Milch über die zweite Leitung in den Vorratsbehälter geleitet werden, unabhängig davon, ob es sich um Separationsmilch oder verkaufsfähige Milch handelt.

In einer Ausgestaltung ist das erste Ventil in der ersten Leitung angeordnet und wird zum Auffüllen des Vorratsbehälters mit verkaufsfähiger Milch von der elektronischen Steuerung in eine Ventilstellung versetzt, in der der Melkroboter mit dem Vorratsbehälter verbunden ist. Die verkaufsfähige Milch gelangt in dieser Ventilstellung dann vom Melkroboter nicht in den Kühltank, sondern in den Vorratsbehälter. Diese Variante ist von besonderem Vorteil in Verbindung mit einem Melkroboter, der eine Pumpe zum Fördern der Milch aufweist. Diese kann dann bei entsprechender Ventilstellung des ersten Ventils das Fördern der verkaufsfähigen Milch in den Vorratsbehälter übernehmen. Dies ist selbst dann möglich, wenn die elektronische Steuerung nicht mit dem Melkroboter kommunizieren kann. Der Melkroboter selbst erhält dann keine Information darüber, dass die gerade gemolkene Milch, obwohl als verkaufsfähig klassifiziert, in den Vorratsbehälter geleitet wird. Darum kann ein handelsüblicher Melkroboter für das Verfahren genutzt werden, ohne dass Eingriffe in dessen Steuerung notwendig sind.

In einer Ausgestaltung wird zum Auffüllen des Vorratsbehälters nach dem ersten Zeitpunkt gemolkene Milch verwendet und von einer Pumpe des Melkroboters in den Vorratsbehälter befördert. Es ist dann nicht erforderlich, zuvor in den Kühltank transportierte, verkaufsfähige Milch zum Auffüllen des Vorratsbehälters dem Kühltank wieder zu entnehmen, sondern es kann (verkaufsfähige) Milch von nach dem ersten Zeitpunkt gemolkenen Kühen unmittelbar in den Vorratsbehälter transportiert werden. Dies ist bei hinreichend großem zeitlichem Abstand zwischen dem ersten Zeitpunkt und dem vorgegebenen Fütterungszeitpunkt möglich (zum Beispiel mindestens 15 Minuten, mindestens 30 Minuten, mindestens 1 Stunde), weil der Melkroboter fast ununterbrochen im Einsatz ist, sodass fortlaufend verkaufsfähige Milch bereitgestellt werden kann.

In einer Ausgestaltung beginnt die elektronische Steuerung das Auffüllen des Vorratsbehälters so rechtzeitig, dass die vorgegebene Fütterungsmenge zu dem vorgegebenen Fütterungszeitpunkt erreicht ist. Wann mit dem Auffüllen begonnen wird, kann die elektronische Steuerung in Abhängigkeit der folgenden Randbedingungen vorgeben: Aufzufüllende Menge, erwarteter Zulauf vom Melkroboter, Möglichkeit, bereits gemolkene Milch zum Auffüllen zu verwenden, zum Beispiel aus dem Kühltank. In jedem Fall kann das Verfahren von der elektronischen Steuerung so ausgeführt werden, dass zum Fütterungszeitpunkt die gewünschte Milchmenge im Vorratsbehälter vorhanden ist.

In einer Ausgestaltung ist ein zweites Ventil vorgesehen, das in einer ersten Ventilstellung die zweite Leitung mit einem Abfluss verbindet, wobei das zweite Ventil von der elektronischen Steuerung während eines Spülvorgangs in die erste Ventilstellung versetzt wird oder dann, wenn der Vorratsbehälter nicht aufnahmefähig ist. Mithilfe des zweiten Ventils kann die elektronische Steuerung Spülflüssigkeit vom Melkroboter in den Abfluss leiten, um zu verhindern, dass die Spülflüssigkeit in den Vorratsbehälter gelangt. Eine Umleitung der zweiten Leitung in den Abfluss über das zweite Ventil ist auch dann möglich, wenn der Vorratsbehälter nicht aufnahmefähig ist, beispielsweise während eines Pasteurisierungs- oder Reinigungsvorgangs im Vorratsbehälter. In dieser Situation vom Melkroboter zufließende Separationsmilch kann dann ebenfalls in den Abfluss umgeleitet werden.

In einer Ausgestaltung ist in der zweiten Leitung vor dem zweiten Ventil ein Sensor angeordnet, der mit der elektronischen Steuerung verbunden und zur Unterscheidung zwischen Milch und Spülflüssigkeit ausgebildet ist, wobei die elektronische Steuerung anhand eines Signals des Sensors das zweite Ventil so ansteuert, dass es sich in der ersten Ventilstellung befindet, solange sich Spülflüssigkeit in der zweiten Leitung befindet. Mithilfe des Sensors gelingt das Umleiten der Spülflüssigkeit in den Abfluss auch dann, wenn keine Kommunikation zwischen der elektronischen Steuerung und dem Melkroboter stattfindet, der Melkroboter einen selbsttätig ausgeführten Spülvorgang also nicht der elektronischen Steuerung mitteilen kann. In diesem Fall kann die elektronische Steuerung anhand des Signals des Sensors den Spülvorgang erkennen und das zweite Ventil entsprechend ansteuern. Die Unterscheidung zwischen Milch und Spülflüssigkeit kann zum Beispiel mit einem optischen Sensor oder mit einem sonstigen Sensor erfolgen, der die unterschiedlichen Eigenschaften der beiden Flüssigkeiten erkennen kann, insbesondere hinsichtlich Trübung oder Farbe.

In der Ausgestaltung ist ein Füllstandsensor vorgesehen, der mit der elektronischen Steuerung verbunden ist und eine Information über den Füllstand im Vorratsbehälter bereitstellt. Mithilfe des Füllstandsensor kann der Füllstand im Vorratsbehälter jederzeit ausgewertet werden.

In einer Ausgestaltung ist ein Durchflussmengenmesser vorgesehen, der mit der elektronischen Steuerung verbunden ist, wobei eine Information über den Füllstand im Vorratsbehälter durch fortlaufende Erfassung der zugeführten Mengen ermittelt wird. In diesem Fall kann auf einen Füllstandsensor im Vorratsbehälter verzichtet werden. Stattdessen wertet die elektronische Steuerung fortlaufend aus, welche Mengen dem Vorratsbehälter ausgehend von einem bekannten Füllstand zugeführt worden sind. Der Durchflussmengenmesser kann zum Beispiel in der zweiten Leitung angeordnet sein. Je nach Position in dieser Leitung kann die elektronische Steuerung die gemessenen Durchflussmengen unterschiedlich verarbeiten. Befindet sich der Durchflussmengensensor beispielsweise vor dem zweiten Ventil, werden Durchflussmengen, die während eines Spülvorgangs bzw. immer dann, wenn sich das zweite Ventil in der ersten Ventilstellung befindet, erfasst werden, nicht berücksichtigt.

In einer Ausgestaltung werden zum Auffüllen des Vorratsbehälters Milchaustauscher und Wasser verwendet, falls keine ausreichende Menge verkaufsfähiger Milch verfügbar ist. In dieser Ausnahmesituation wird der Vorratsbehälter nicht wie sonst mit Vollmilch vom Melkroboter aufgefüllt, sondern mit einer Mischung aus Milchaustauscher und Wasser.

In einer Ausgestaltung dosiert die elektronische Steuerung die zum Auffüllen des Vorratsbehälters mit Milchaustauscher und Wasser benötigte Wassermenge automatisch in den Vorratsbehälter. Hierfür kann insbesondere temperiertes Wasser mit einer Temperatur nahe der gewünschten Fütterungstemperatur verwendet werden. Auch im Fall der Verwendung von Milchaustauscher und Wasser kann das Auffüllen des Vorratsbehälters also mindestens teilweise automatisch und/oder durch die elektronische Steuerung unterstützt erfolgen.

In einer Ausgestaltung berechnet die elektronische Steuerung die zum Auffüllen des Vorratsbehälters mit Milchaustauscher und Wasser benötigte Menge Milchaustauscher und dosiert diese automatisch in den Vorratsbehälter oder macht eine Information über die berechnete Menge für eine Bedienperson verfügbar. Im letztgenannten Fall obliegt es der Bedienperson, die berechnete Menge des Milchaustauschers in den Vorratsbehälter einzufüllen. Durch die von der elektronischen Steuerung verfügbar gemachte Information über die berechnete Menge wird dieser Vorgang allerdings wesentlich vereinfacht und kann auch von gering qualifiziertem Personal durchgeführt werden. Das Verfügbarmachen der Information kann beispielsweise durch Anzeigen der berechneten Menge auf einem Display oder durch Versenden einer die Information enthaltenden Nachricht an ein Mobilgerät geschehen.

In einer Ausgestaltung ist die Fütterungseinrichtung ein Milchwagen, wobei entweder (i) der Milchwagen den Vorratsbehälter aufweist oder (ii) der Vorratsbehälter stationär ist und der Milchwagen einen gesonderten Behälter aufweist, der aus dem Vorratsbehälter befüllt wird. Der Milchwagen kann einen elektrischen Fahrantrieb und/oder eine Dosiereinrichtung aufweisen, mit der der mittels des Milchwagens zu den einzelnen Tränken transportierte Vorrat an Milch in die Tränken (zum Beispiel Tränkeeimer) dosiert werden kann. Im einfachsten Fall wird der mit dem Milchwagen transportierte Behälter als Vorratsbehälter verwendet, d. h. gemäß dem erfindungsgemäßen Verfahren fortlaufend mit Separationsmilch befüllt und bei Bedarf rechtzeitig mit Vollmilch aufgefüllt. Diese Ausgestaltung kommt ohne einen zusätzlichen Behälter für die Verteilung der Milch aus. Allerdings ist der Milchwagen während der Verteilung der Milch unterwegs und steht in dieser Zeit nicht als Vorratsbehälter für das Verfahren zur Verfügung, sodass die vom Melkroboter zulaufende Separationsmilch unter Umständen nicht verwertet werden kann. In der zweiten Variante wird darum ein stationärer Vorratsbehälter eingesetzt, der weitgehend ununterbrochen (gegebenenfalls mit Ausnahme kurzer Reinigungsvorgänge) zur Aufnahme der Separationsmilch bereit ist. Von diesem Vorratsbehälter wird die Milch für die Verteilung mit dem Milchwagen in den gesonderten Behälter des Milchwagens umgefüllt.

In einer Ausgestaltung steuert die elektronische Steuerung einen Heiz- und Kühlvorgang von im Vorratsbehälter bereitgestellter Milch so, dass die zum Fütterungszeitpunkt bereitstehende Milch bereits pasteurisiert ist. Hierzu ist die elektronische Steuerung mit einer elektrischen oder mit Warmwasser versorgten Heizeinrichtung und mit einer elektrischen oder mit Kaltwasser versorgten Kühleinrichtung verbunden und steuert diese so an, dass die Milch zunächst auf eine Pasteurisierungstemperatur von zum Beispiel 60 °C erwärmt wird. Auf dieser Temperatur wird die Milch für einen vorgegebenen Zeitraum von zum Beispiel 30 Minuten gehalten. Anschließend wird die Milch durch Ansteuern der Kühlvorrichtung heruntergekühlt, insbesondere auf eine Fütterungstemperatur von etwa 40 °C. Um den eine gewisse Zeit beanspruchenden Pasteurisierungsvorgang rechtzeitig zur Fütterungszeit abzuschließen, wird er von der elektronischen Steuerung frühzeitig eingeleitet. Insbesondere kann der erste Zeitpunkt, zu dem der Füllstand im Vorratsbehälter ausgewertet wird, entsprechend lange vor dem Fütterungszeitpunkt gewählt werden, damit das Auffüllen des Vorratsbehälters und die (anschließende) Pasteurisierung rechtzeitig abgeschlossen werden können.

In einer Ausgestaltung umfasst der Heiz- und Kühlvorgang einen der folgenden Abläufe:
(i) Aufheizen und Kühlen der in dem Vorratsbehälter befindlichen Milch in dem Vorratsbehälter, oder
(ii) Hindurchleiten von dem Vorratsbehälter entnommener Milch durch einen Wärmetauscher und Zurückführen in den Vorratsbehälter, oder
(iii) Hindurchleiten von dem Vorratsbehälter entnommener Milch durch einen Durchlaufpasteurisierer und Einfüllen in einen gesonderten Behälter.

Bei der ersten Variante verbleibt die gesamte im Vorratsbehälter befindliche Milch in dem Vorratsbehälter und wird darin pasteurisiert. Hierzu kann insbesondere ein Vorratsbehälter mit einem Kühlmantel verwendet werden, also ein doppelwandig ausgeführter Behälter, bei dem ein Kühlmittel (insbesondere kaltes Wasser) durch einen Hohlraum zwischen den beiden Wandungen hindurchgeleitet wird. Das Aufheizen kann mit einer elektrischen Heizeinrichtung ausgeführt werden, die zum Beispiel am Boden des Vorratsbehälters angeordnet sein kann. Alternativ kann zum Aufheizen heißes Wasser durch den Kühlmantel geleitet werden. Das Hindurchführen des kalten und/oder heißen Wassers durch den Kühlmantel kann (z.B. durch Öffnen und Schliessen entsprechender Ventile und/oder Ein- uns Ausschalten einer Pumpe) ebenso wie das Ein- und Ausschalten der elektrischen Heizeinrichtung von der elektronischen Steuerung automatisch gesteuert werden.

Bei der zweiten Alternative wird die im Vorratsbehälter bereitgestellte Milch durch einen Wärmetauscher geleitet und in den Behälter zurückgeführt, insbesondere in einem Kreislauf. Der Wärmetauscher kann stationär angeordnet sein, zum Beispiel in Form einer Wallbox an einer Wand befestigt. Auf einen Kühlmantel kann verzichtet werden, sodass ein einfacherer Vorratsbehälter verwendet werden kann. Der Wärmetauscher kann für das Heizen und Kühlen eingesetzt werden oder, insbesondere in Kombination mit einer elektrischen Heizeinrichtung, nur für das Kühlen. In jedem Fall kann der Wärmetauscher ebenfalls automatisch von der elektronischen Steuerung gesteuert werden, sodass die Pasteurisierung ohne zusätzlichen Arbeitsaufwand ausgeführt wird. In Verbindung mit einem Milchwagen kann eine Dosiervorrichtung des Milchwagens zum Fördern der Milch aus dem Vorratsbehälter durch den Wärmetauscher verwendet werden, sodass keine zusätzliche Pumpe erforderlich ist.

Bei der dritten Alternative wird ein Durchlaufpasteurisierer verwendet. Die dem Vorratsbehälter entnommene Milch wird langsam durch den Durchlaufpasteurisierer hindurchgeleitet und in einen gesonderten Behälter (beispielsweise in den gesonderten Behälter eines Milchwagens) eingefüllt. In dem Durchlaufpasteurisierer durchläuft die Milch die zur Pasteurisierung erforderlichen Temperaturen. Auch der Durchlaufpasteurisierer und das Hindurchleiten der Milch und Befüllen des gesonderten Behälters können von der elektronischen Steuerung automatisch ausgeführt werden.

In einer Ausgestaltung ist die Fütterungseinrichtung ein Fütterungsautomat zur portionsweisen Bereitstellung von Tränkerationen. Der Fütterungsautomat kann mit dem Vorratsbehälter verbunden sein oder mit einem gesonderten Behälter, in den die zuvor im Vorratsbehälter bereitgestellte Milch umgefüllt worden ist, z.B. unter Einbeziehung eines Durchlaufpasteurisierers. Der Fütterungsautomat ist insbesondere mit einem Saugnuckel verbunden. Der Fütterungsautomat entnimmt die für ein Kalb vorgesehene Portion Vollmilch aus dem Vorratsbehälter und stellt diese über den Saugnuckel zur Verfügung. Der Vorratsbehälter bleibt während dieses Vorgangs zur Aufnahme von Separationsmilch vom Melkroboter verfügbar.

Die oben genannte Aufgabe wird ebenfalls gelöst durch das System zur Versorgung von Kälbern mit Vollmilch mit den Merkmalen des Anspruchs 15. Das System weist folgendes auf:
- einen Melkroboter mit einer Einrichtung zum Identifizieren der jeweils gemolkenen Kuh, wobei der Melkroboter dazu ausgebildet ist, nach Maßgabe einer zu der gemolkenen Kuh gespeicherten Information zwischen verkaufsfähiger Milch und Separationsmilch zu unterscheiden,
- einen Kühltank zur Aufnahme von verkaufsfähiger Milch, wobei der Kühltank über eine erste Leitung mit dem Melkroboter verbunden ist,
- einen Vorratsbehälter zur Aufnahme von Separationsmilch, wobei der Vorratsbehälter über eine zweite Leitung mit dem Melkroboter verbunden ist und dem Vorratsbehälter eine Einrichtung zur Ermittlung eines Füllstands zugeordnet ist, und
- eine elektronische Steuerung, wobei die elektronische Steuerung dazu ausgebildet ist, einen Füllstand in dem Vorratsbehälter zu einem ersten Zeitpunkt, der vor einem vorgegebenen Fütterungszeitpunkt liegt, auszuwerten, und, falls der Füllstand eine vorgegebenen Fütterungsmenge unterschreitet, durch Ansteuern eines ersten Ventils und/oder einer Pumpe den Vorratsbehälter mit verkaufsfähiger Milch aufzufüllen, bis die vorgegebene Fütterungsmenge erreicht ist.

Zu den Merkmalen und Vorteilen des Systems wird auf die vorstehenden Erläuterungen des Verfahrens verwiesen, die entsprechend gelten. Das System kann entsprechend den Erläuterungen zum Verfahren weiter ausgestaltet werden, wie es sich aus den Unteransprüchen des Verfahrensanspruchs ergibt. Das System kann zusätzlich eine Fütterungseinrichtung zum Verteilen der Milch aus dem Vorratsbehälter an Kälber aufweisen.

Nachfolgend wird die Erfindung anhand einer Figur näher erläutert.

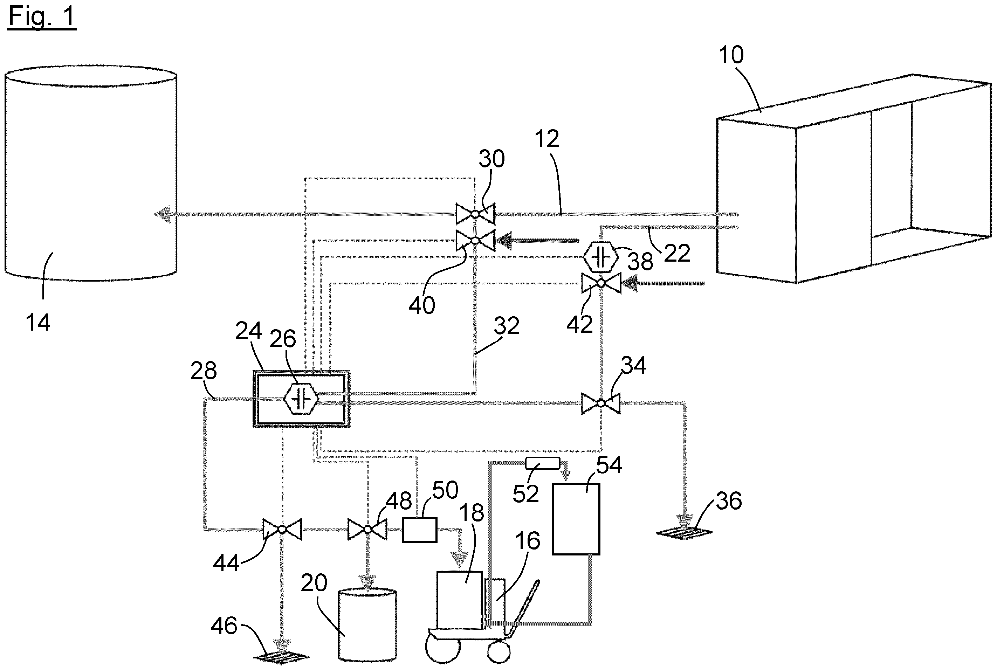

- Fig. 1: zeigt ein System zur Fütterung von Kälbern in einer schematischen Darstellung.

In der Fig. 1 befindet sich oben rechts ein Melkroboter 10, der auf der dem Betrachter zugewandten Seite eine Öffnung aufweist, durch die Kühe einzeln in den Melkroboter 10 eintreten können, um dort automatisch gemolken zu werden. Dabei werden sie vom Melkroboter 10 identifiziert und die gemolkene Milch wird gegebenenfalls als Separationsmilch klassifiziert. Handelt es sich nicht um Separationsmilch, sondern um verkaufsfähige Milch, wird diese über eine erste Leitung 12 vom Melkroboter 10 in einen oben links gezeigten Kühltank 14 geleitet. Im Kühltank 14 wird die Milch gekühlt und bis zur Abholung z.B. durch eine Molkerei gelagert.

In der Fig. 1 unten ist eine Fütterungseinrichtung in Form eines Milchwagens 16, der einen gesonderten Behälter 18 aufweist, dargestellt. Links davon befindet sich ein stationärer Vorratsbehälter 20, der über eine zweite Leitung 22 mit dem Melkroboter 10 verbunden ist.

In der Mitte der Fig. 1 ist eine elektronische Steuerung 24 dargestellt, die einen Durchflussmengenmesser 26 aufweist bzw. mit diesem verbunden ist. Der Durchflussmengenmesser 26 befindet sich in einem Abschnitt 28 der zweiten Leitung 22, der zum Vorratsbehälter 20 führt. Die elektronische Steuerung 24 ist über gestrichelt dargestellten Datenverbindungen mit mehreren Ventilen verbunden und kann diese ansteuern.

Hierzu zählt insbesondere ein erstes Ventil 30, das in der ersten Leitung 12 angeordnet ist. Dieses erste Ventil 30 kann von der elektronischen Steuerung 24 in eine Ventilstellung versetzt werden, in der die verkaufsfähige, vom Melkroboter 10 stammende Milch über eine dritte Leitung 32 in den genannten Abschnitt 28 der zweiten Leitung 22, der zum Vorratsbehälter 20 führt, gelangt. In einer anderen Ventilstellung des ersten Ventil 30 ist die Verbindung zwischen dem Melkroboter 10 und der dritten Leitung 32 abgesperrt und die vom Melkroboter 10 kommende Milch strömt durch das erste Ventil 30 hindurch in den Kühltank 14.

Ebenfalls gezeigt ist ein zweites Ventil 34, das in der zweiten Leitung 22 angeordnet ist. In einer ersten Ventilstellung verbindet dieses zweite Ventil 34 die vom Melkroboter 10 kommende, zweite Leitung 22 mit einem Abfluss 36. Die elektronische Steuerung 24 versetzt das zweite Ventil 34 in diese erste Ventilstellung, falls der Vorratsbehälter 20 nicht aufnahmefähig ist oder falls vom Melkroboter 10 eine Spülflüssigkeit in die zweite Leitung 22 geleitet wird.

In der zweiten Leitung 22 vor dem zweiten Ventil 34 befindet sich ein Sensor 38, der zwischen Milch und Spülflüssigkeit unterscheiden kann. Dieser Sensor 38 ist ebenfalls mit der elektronischen Steuerung 24 verbunden und ermöglicht der elektronischen Steuerung 24 die entsprechende Ansteuerung des zweiten Ventils 34. Dies ist insbesondere dann wichtig, wenn der Melkroboter 10 datentechnisch nicht mit der elektronischen Steuerung 24 verbunden ist und selbsttätig einen Spülvorgang der zweiten Leitung 22 ausführt.

Das in Fig. 1 gezeigte System bietet darüber hinaus die Möglichkeit, unabhängig vom Melkroboter 10 unterschiedliche Spülvorgänge auszuführen. Hierzu gibt es ein drittes Ventil 40 und ein viertes Ventil 42, über die jeweils, wie durch einen nach links weisenden Pfeil angedeutet, Spülflüssigkeit zugeführt werden kann. Die Spülflüssigkeit gelangt durch das dritte Ventil 40 in die zur elektronischen Steuerung 24 führende, dritte Leitung 32. Bei einem Spülvorgang kann ein kurz vor dem Vorratsbehälter 20 in der zweiten Leitung 22 angeordnete fünfte Ventil 44 so geschaltet werden, dass die Spülflüssigkeit in einen weiteren Abfluss 46 gelangt. Das vierte Ventil 42 ermöglicht eine externe Spülung der zweiten Leitung 22 mit Auslass für die Spülflüssigkeit entweder in den Abfluss 36 oder über das fünfte Ventil 44 in den weiteren Abfluss 46.

Schließlich ist ein sechstens Ventil 48 dargestellt, über das sowohl die Separationsmilch als auch die zum Auffüllen des Vorratsbehälters 20 verwendete, verkaufsfähige Milch in einer ersten Ventilstellung in den Vorratsbehälter 20 gelangt. In einer zweiten Ventilstellung kann diese Milch auch in den gesonderten Behälter 18 des Milchwagens 16 weitergeleitet werden. Ebenfalls möglich ist ein Befüllen des gesonderten Behälters 18 des Milchwagens 16 aus dem Vorratsbehälter 20 über das sechste Ventil 48, wofür ebenfalls eine geeignete Ventilstellung vorgesehen ist. Dabei kann ein Durchlaufpasteurisierer 50 durchlaufen werden, sodass die in dem gesonderten Behälter 18 des Milchwagens 16 zur Fütterung bereitstehende Milch pasteurisiert ist.

Alternativ kann die zur Fütterung vorgesehene Milch aus dem Vorratsbehälter 20 oder, wie in Fig. 1 dargestellt, aus dem gesonderten Behälter 18 des Milchwagens 16 durch einen Wärmetauscher 54 hindurchgeleitet und in einem Kreislauf in den gesonderten Behälter 18 zurückgeführt werden. Um die in dem gesonderten Behälter 18 befindliche Milch durch den Wärmetauscher 54 hindurchzuleiten, kann eine Dosiervorrichtung 52 des Milchwagens 16 verwendet werden. Diese Variante ist auch dann möglich, wenn der gesonderte Behälter 18 des Milchwagens 15 die Rolle des Vorratsbehälter 20 einnimmt.

### Liste der Bezugszeichen

- 10: Melkroboter
- 12: erste Leitung
- 14: Kühltank
- 16: Milchwagen
- 18: gesonderter Behälter
- 20: Vorratsbehälter
- 22: zweite Leitung
- 24: elektronische Steuerung
- 26: Durchflussmengenmesser
- 28: Abschnitt der zweiten Leitung
- 30: erstes Ventil
- 32: dritte Leitung
- 34: zweites Ventil
- 36: Abfluss
- 38: Sensor
- 40: drittes Ventil
- 42: viertes Ventil
- 44: fünftes Ventil
- 46: weiterer Abfluss
- 48: sechstes Ventil
- 50: Durchlaufpasteurisierer
- 52: Dosiereinrichtung
- 54: Wärmetauscher

## Patentansprüche

1. Verfahren zur Versorgung einer Fütterungseinrichtung mit Vollmilch, wobei das Verfahren die folgenden Schritte aufweist:
• Melken einer Vielzahl von Kühen mit einem Melkroboter (10), der die jeweils gemolkene Kuh identifiziert, wobei die Milch mindestens einer der Kühe als Separationsmilch klassifiziert ist,
• Einleiten von verkaufsfähiger Milch über eine erste Leitung (12) von dem Melkroboter (10) in einen Kühltank (14),
• Einleiten von Separationsmilch über eine zweite Leitung (22) von dem Melkroboter (10) in einen Vorratsbehälter (20), aus dem die Milch mit einer Fütterungseinrichtung an Kälber verteilt werden soll, wobei bei dem Verfahren eine elektronische Steuerung (24) verwendet wird, die die folgenden Schritte ausführt:
• Auswerten eines Füllstands in dem Vorratsbehälter (20) zu einem ersten Zeitpunkt, der vor einem vorgegebenen Fütterungszeitpunkt liegt, und, falls der Füllstand eine vorgegebenen Fütterungsmenge unterschreitet,
• Auffüllen des Vorratsbehälters (20) mit verkaufsfähiger Milch, bis die vorgegebene Fütterungsmenge erreicht ist, wobei das Auffüllen von der elektronischen Steuerung (24) durch Ansteuern eines ersten Ventils (30) und/oder einer Pumpe bewirkt wird.

2. Verfahren nach Anspruch 1, bei dem das erste Ventil (30) und/oder die Pumpe in dem Melkroboter (10) angeordnet ist, wobei das Ansteuern des ersten Ventils (30) und/oder der Pumpe dadurch ausgeführt wird, dass die elektronische Steuerung (24) ein Steuersignal an den Melkroboter (10) abgibt.

3. Verfahren nach Anspruch 1, bei dem das erste Ventil (30) in der ersten Leitung (12) angeordnet ist und zum Auffüllen des Vorratsbehälters (20) mit verkaufsfähiger Milch von der elektronischen Steuerung (24) in eine Ventilstellung versetzt wird, in der der Melkroboter (10) mit dem Vorratsbehälter (12) verbunden ist.

4. Verfahren nach einem der Ansprüche 1 bis 3, bei dem zum Auffüllen des Vorratsbehälters (20) nach dem ersten Zeitpunkt gemolkene Milch verwendet und von einer Pumpe des Melkroboters (10) in den Vorratsbehälter (20) gefördert wird.

5. Verfahren nach einem der Ansprüche 1 bis 4, bei dem die elektronische Steuerung (24) das Auffüllen des Vorratsbehälters (20) so rechtzeitig beginnt, dass die vorgegebene Fütterungsmenge zu dem vorgegebenen Fütterungszeitpunkt erreicht ist.

6. Verfahren nach einem der Ansprüche 1 bis 5, bei dem ein zweites Ventil (34) vorgesehen ist, das in einer ersten Ventilstellung die zweite Leitung (22) mit einem Abfluss (36) verbindet, wobei das zweite Ventil (34) von der elektronischen Steuerung (24) während eines Spülvorgangs in die erste Ventilstellung versetzt wird oder dann, wenn der Vorratsbehälter (20) nicht aufnahmefähig ist.

7. Verfahren nach Anspruch 6, bei dem in der zweiten Leitung (22) vor dem zweiten Ventil (34) ein Sensor (38) angeordnet ist, der mit der elektronischen Steuerung (24) verbunden und zur Unterscheidung zwischen Milch und Spülflüssigkeit ausgebildet ist, wobei die elektronische Steuerung (24) auf Grundlage eines Signals des Sensors (38) das zweite Ventil (34) so ansteuert, dass es sich in der ersten Ventilstellung befindet, solange sich Spülflüssigkeit in der zweiten Leitung (22) befindet.

8. Verfahren nach einem der Ansprüche 1 bis 7, bei dem ein Füllstandssensor vorgesehen ist, der mit der elektronischen Steuerung (24) verbunden ist und eine Information über den Füllstand im Vorratsbehälter (20) bereitstellt oder bei dem ein Durchflussmengenmesser (26) vorgesehen ist, der mit der elektronischen Steuerung (24) verbunden ist, wobei eine Information über den Füllstand im Vorratsbehälter (20) durch fortlaufende Erfassung der zugeführten Mengen ermittelt wird.

9. Verfahren nach einem der Ansprüche 1 bis 8, bei dem, falls keine ausreichende Menge verkaufsfähiger Milch verfügbar ist, zum Auffüllen des Vorratsbehälters (20) Milchaustauscher und Wasser verwendet wird.

10. Verfahren nach Anspruch 9, bei dem die elektronische Steuerung (24) die zum Auffüllen des Vorratsbehälters (20) mit Milchaustauscher und Wasser benötigte Wassermenge automatisch in den Vorratsbehälter (20) dosiert, wobei insbesondere die elektronische Steuerung (24) die benötigte Menge Milchaustauscher berechnet und automatisch in den Vorratsbehälter (20) dosiert oder eine Information über die berechnete Menge für eine Bedienperson verfügbar macht.

11. Verfahren nach einem der Ansprüche 1 bis 10, bei dem die Fütterungseinrichtung ein Milchwagen (16) ist, wobei entweder (i) der Milchwagen (16) den Vorratsbehälter (20) aufweist oder (ii) der Vorratsbehälter (20) stationär ist und der Milchwagen (16) einen gesonderten Behälter (18) aufweist, der aus dem Vorratsbehälter (20) befüllt wird.

12. Verfahren nach einem der Ansprüche 1 bis 11, bei dem die elektronische Steuerung (20) einen Heiz- und Kühlvorgang von im Vorratsbehälter (20) bereitgestellter Milch so steuert, dass die zum Fütterungszeitpunkt bereitstehende Milch bereits pasteurisiert ist.

13. Verfahren nach Anspruch 12, bei dem der Heiz- und Kühlvorgang einen der folgenden Abläufe umfasst:
(i) Aufheizen und Kühlen der in dem Vorratsbehälter (20) befindlichen Milch in dem Vorratsbehälter (20), oder
(ii) Hindurchleiten von dem Vorratsbehälter (20) entnommener Milch durch einen Wärmetauscher (54) und Zurückführen in den Vorratsbehälter (20), oder
(iii) Hindurchleiten von dem Vorratsbehälter (20) entnommener Milch durch eine Durchlaufpasteurisierer (54) und Einfüllen in einen gesonderten Behälter (18).

14. Verfahren nach einem der Ansprüche 1 bis 13, bei dem die Fütterungseinrichtung ein Fütterungsautomat zur portionsweisen Bereitstellung von Tränkerationen ist.

15. System zur Versorgung von Kälbern mit Vollmilch, wobei das System folgendes aufweist:
• einen Melkroboter (10) mit einer Einrichtung zum Identifizieren der jeweils gemolkenen Kuh, wobei der Melkroboter (10) dazu ausgebildet ist, nach Maßgabe einer zu der gemolkenen Kuh gespeicherten Information zwischen verkaufsfähiger Milch und Separationsmilch zu unterscheiden,
• einen Kühltank (14) zur Aufnahme von verkaufsfähiger Milch, wobei der Kühltank (14) über eine erste Leitung (12) mit dem Melkroboter (10) verbunden ist,
• einen Vorratsbehälter (20) zur Aufnahme von Separationsmilch, wobei der Vorratsbehälter (20) über eine zweite Leitung (22) mit dem Melkroboter (10) verbunden ist und dem Vorratsbehälter (20) eine Einrichtung zur Ermittlung eines Füllstands zugeordnet ist, und
• eine elektronische Steuerung (24), wobei die elektronische Steuerung (24) dazu ausgebildet ist, einen Füllstand in dem Vorratsbehälter (20) zu einem ersten Zeitpunkt, der vor einem vorgegebenen Fütterungszeitpunkt liegt, auszuwerten, und, falls der Füllstand eine vorgegebenen Fütterungsmenge unterschreitet, durch Ansteuern eines ersten Ventils (30) und/oder einer Pumpe den Vorratsbehälter (20) mit verkaufsfähiger Milch aufzufüllen, bis die vorgegebene Fütterungsmenge erreicht ist.
